# EUROPEAN PATENT SPECIFICATION

(11) **EP 2 516 131 B1**
(45) Date of publication and mention of the grant of the patent: **30.05.2018**
(21) Application number: 10810985.1
(22) Date of filing: 16.12.2010
(51) Int. Cl.: B29C 47/92, B29C 47/00, B29C 47/08, B29C 47/34, B29C 47/36, B29C 47/40, B29C 47/60, B29L 30/00, B29K 105/00, B29K 105/24, B29K 21/00

(54) **EXTRUSION PROCESS AND DEVICE FOR PRODUCING ELASTOMERIC COMPOUNDS**
EXTRUSIONSVERFAHREN UND VORRICHTUNG ZUR HERSTELLUNG VON ELASTOMERVERBINDUNGEN
PROCÉDÉ D'EXTRUSION ET DISPOSITIF DE PRODUCTION DE COMPOSÉS ÉLASTOMÈRES

(30) Priority: 22.12.2009 IT MI20092264; 30.12.2009 US 282205 P
(43) Date of publication of application: 31.10.2012
(73) Proprietor: Pirelli Tyre S.p.A., 20126 Milano (IT)
(72) Inventor: TESTI, Stefano, I-20126 Milano (IT); LONGONI, Alessio, I-20126 Milano (IT); BOTTOMLEY, Alan, I-20126 Milano (IT)
(74) Representative: Tirloni, Bartolomeo
(86) International application number: PCT/IB2010/055864
(87) International publication number: WO 2011/077330

(56) References cited:
- EP-A1- 0 512 303
- WO-A1-2006/037369
- WO-A1-2009/062525
- WO-A1-2010/073275
- CH-A5- 689 715
- US-A- 3 274 645
- US-A- 3 354 686
- US-A- 3 543 557
- US-A- 4 354 814

## Description

The present invention relates to an extrusion process and plant for producing elastomeric compounds.

In particular, the invention concerns an extrusion process and plant for producing elastomeric compounds intended for manufacturing tyres for vehicle wheels.

A tyre for vehicle wheels generally comprises a carcass structure including at least one carcass ply having respectively opposite end flaps in engagement with respective annular anchoring structures integrated into the regions usually identified as "beads". Associated with the carcass structure is a belt structure comprising one or more belt layers, located in radial superposed relationship with each other and the carcass ply, having textile or metallic reinforcing cords with a crossed orientation and/or substantially parallel to the circumferential extension direction of the tyre. Applied at a radially external position to the belt structure is a tread band of elastomeric compound like other semifinished products constituting the tyre. In addition, respective sidewalls of elastomeric compound are applied at an axially external position to the side surfaces of the carcass structure, each extending from one of the side edges of the tread band until close to the respective annular anchoring structure to the beads.

After building of the green tyre accomplished through assembly of respective semifinished products, a curing and molding treatment is generally carried out which aims at determining the structural stabilisation of the tyre through cross-linking of the elastomeric compounds as well as at impressing the tread band wound around the carcass before curing, with a desired tread pattern and stamping possible distinctive graphic marks at the sidewalls.

Document US 5,158,725 shows a method of continuously producing elastomeric blends through use of a twin-screw extruder. The method comprises the steps of: providing a twin-screw extruder including a cylindrical body containing the two screws, the cylindrical body being associated with feeding openings and relief and ventilation openings; calculating the desired feeding speeds based on the elastomeric-compound viscosity, the extruder size, the torque and temperature limits and the operating speed of the extruder; continuously feeding an elastomer in a controlled manner into the extruder through a feeding opening; feeding further ingredients through a feeding opening or openings; mixing the ingredients with the elastomer so as to obtain a compound; controlling the compound pressure and temperature along the screw length; unloading the compound through the extruder's outlet opening. After leaving the extruder, the compound can be extruded through a die, calendered into sheets, strips, threads and can be pelletized. The different additional apparatuses required in the continuous process can be disposed close to each other for obtaining a continuous cascade process.

Document US 4,127,373 shows a plant made up of an extruder and a two-roller calender for production of films or sheets of synthetic plastic material or rubber. The plant comprises a pair of calendering rollers mounted on a frame and an extruder nozzle is directed to the slit between the rollers. The frame is pivotally mounted in such a manner that it can rotate away from the nozzle to enable quick access to the nozzle so that the nozzle can be cleaned.

Document GB 1,139,400 shows an extruder and a pair of rollers cooperating with each other. The extruder comprises a cylindrical body adapted to supply material in the plastic state to said rollers, to carry out calendering thereof, and a frame carrying the rollers. The extruder and frame are of such a nature as to enable a relative movement between them if excess material is fed by the extruder to the rollers. An extrusion head is mounted on the cylindrical body and coupled to the frame so as to be able to provide the material in the plastic state from the cylindrical body to the rollers. Elastic means connects said extruder to said frame to enable limited relative movement between them.

Document US 4,124,346 shows a method of changing the distribution model of the extrudate flow through a final die defining the section shape of the extruded product. The final die houses a removable insert provided with a workable surface exposed to the flow of the material under pressure.

The method consists in positioning the insert in the die, extruding a material portion and inspecting said portion, removing the insert and working the workable portion again to reduce or remove deviations from the desired section shape of the extruded product.

WO 2009/062525 discloses a process for producing an elastomeric compound, comprising: feeding an elastomeric polymer and a reinforcing filler to a batch mixing device so as to obtain an elastomeric compound; feeding said elastomeric compound to a continuous mixing device comprising at least two rotating screws; and mixing the elastomeric compound into the continuous mixing device.

WO 2010/073275 A1 discloses a compound plant for processing elastomeric compounds for tyres. A batch mixing device is combined with at least one multi-shaft continuous mixing device having a high number of shafts, for example a ring extruder.

US 4,354,814 discloses an extruder with a wide extrusion head and an associated calender, the wide extrusion head having an upper extrusion head part and a lower extrusion head part, which parts can be moved away from one another.

The Applicant has noticed that the elastomeric compounds are thermosensitive and are subjected to scorching and dangerous and undesired curing processes, if during extrusion are brought even locally beyond a temperature limit which, depending on the type of compound, can be included between about 90°C and 130°C.

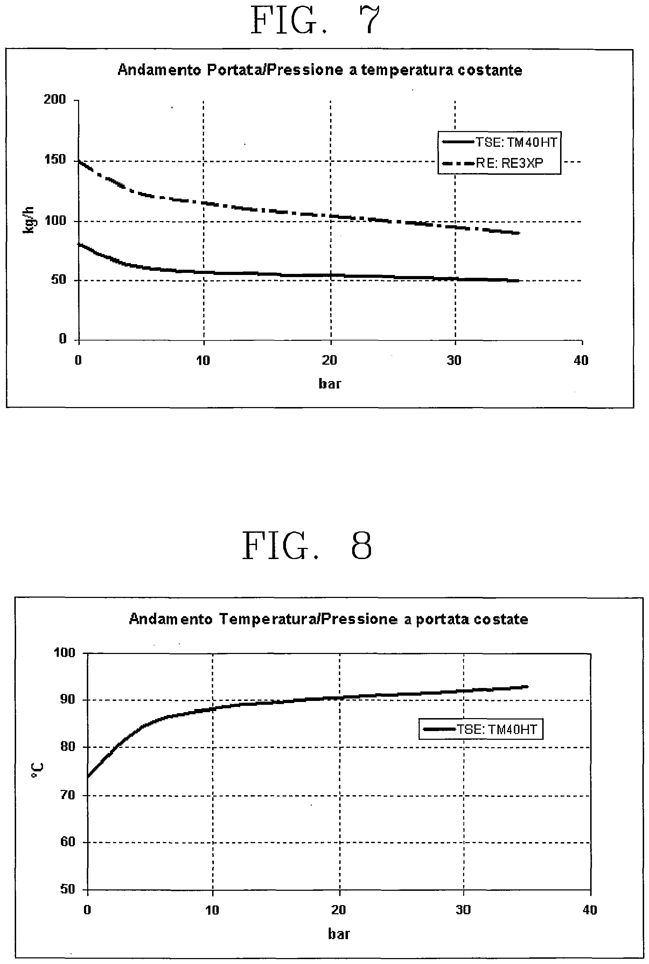

The Applicant has further observed that, in elastomeric-compound production by means of extruders working continuously, the lower the pressure in the extrusion head is, the greater the obtainable flow rate, the temperature of the outgoing compound being the same. The graph reproduced in Fig. 7 illustrates this behaviour. This graph shows two curves: the lower curve was obtained with a twin-screw extruder "TSE" (Maris TM40HT, D=40 mm) with a fixed head (die), the upper curve with a ring extruder "RE" (Extricom RE3XP) with a fixed head (die). Each point of each of the two curves was obtained with a different outlet mouth of the die, the treated compound being the same. On moving from left to right the passage area of the mouth decreases, the flow rate decreases and pressure increases.

The Applicant has further observed that to a pressure increase in the extrusion head, a temperature increase of the outgoing compound corresponds, the flow rate being the same. The graph reproduced in Fig. 8 shows this behaviour. The curve shown was obtained with a twin-screw extruder "TSE" (Maris TM40HT, D0 40 mm) with a fixed head (die). Each point of the curve was obtained with a different outlet attachment of the die, the treated compound being the same. On moving from left to right, the passage area of the outlet attachment decreases, temperature and pressure increase.

The Applicant has further noticed that, having fixed the temperature variation that the compound can withstand, the flow rate of the compound coming out of the extruder can be increased by reducing the pressure increase due to passage through the extrusion head. In particular, said pressure increase in a fixed head (die) is generally much higher than the pressure increase due to a head provided with one or more rollers (a calender).

In addition, the Applicant has observed that the rise in temperature, the flow rate and pressure increase being the same, depends on the properties of the elastomeric material. In particular, temperature increases with viscosity. The Applicant has taken into account the problem of producing different semifinished products (with different physico-chemical features of the compounds) with the same extruder, while maintaining the quality to a high degree and with a productivity compatible with production volumes of the industrial type.

In fact, the Applicant has observed that in a compound room of a tyre-producing plant it is usual to manage plenty of compounds because each component of each tyre type can need a specific compound.

The Applicant has found that, by selecting the type of the extrusion head based on the features (viscosity, stickiness, green strength, for example) of the elastomeric material being processed, it is possible to maximise the flow rate of said material coming out of the extruder, keeping the pressure increase to a desired level and the temperature under the critical values for that type of compound.

In addition, the Applicant has found that, making it possible to carry out a quick and easy replacement of a type of head with another one on the same extruder, the flow rate for each individual compound can be optimised without many extruders being required and, as a result, without the necessity of wide spaces for placement of them.

More specifically, in an aspect the present invention relates to an extrusion process for producing elastomeric compounds according to claim 9

In accordance with a further aspect, the present invention relates to an extrusion device for producing elastomeric compounds according to claim 1.

Selection of the extrusion head to be used (either dies with shaping slits of different sections or calenders) is carried out in such a manner as to maintain the compound temperature and/or the extrusion device pressure below the acceptable limit for that type of compound.

The extrusion device and process according to the invention therefore allow: flow rates compatible with the production of tyres in an industrial amount to be obtained irrespective of the compound type being processed, the plant costs and spaces required for installing them to be maintained within limits, the device to be efficiently utilised by sequentially passing from extrusion of a type of compound to that of a different compound.

Installation of the shaping die on the movable supporting body enables quick replacement of same.

Since the first supporting body is hinged on the holding body and movable in rotation between the first and second positions, the shaping die is already in the vicinity of the portion of the extrusion device to which it has to be coupled.

The calendering device too is easily handled through displacement of the second supporting body on which it is installed.

Taken into account the great mass of the calendering device, installation of said device on the carriage makes displacements of the same safer and easier.

In accordance with a further aspect, the present invention relates to a tyre production process according to claim 13.

Preferred embodiments of the invention are set forth in the dependent claims 2 to 8 and 10 to 12.

The present invention, in at least one of the aforesaid aspects, can have one or more of the preferred features hereinafter described.

Preferably, the physico-chemical features comprise viscosity.

Preferably, the physico-chemical features comprise stickiness.

Preferably, the physico-chemical features comprise green strength.

In the present specification and in the following claims, low viscosity of the elastomeric compound means a viscosity included between about 30 ML (1+4) and about 50 ML (1+4); high viscosity means a viscosity greater than about 75 ML (1+4).

In the present specification and in the following claims, the term "stickiness of a compound" is understood as generally indicating the compound tendency to adhere to a surface. In particular, it is intended as the compound tendency to adhere to the surfaces of the different components of the extrusion device that may come into contact with the compounds (or precursors thereof). This tendency can be typically classified by a rough classification ("low" stickiness, "medium" stickiness, "high" stickiness), based on remarks and/or heuristic tests. More precise and quantitative evaluations can be carried out by devices known as "tack testers".

In the present specification and the appended claims, by "green strength" of the material it is generally intended the strength (intended in terms of cohesion, size stability, tearing resistance, elasticity, etc.) of a material in an uncured state. This feature is important for a compound for tyres because it is an evaluation of how this compound can be manipulated and controlled during the production and/or assembling steps of the semifinished products required for building a green tyre. In this case too the evaluation can be typically carried out by a rough classification ("high" green strength, "medium" green strength, "low" green strength), and/or in a more quantitative manner using known ASTM standards.

In case of extrusion of high-green strength compounds, of reduced viscosity and very sticky (critical compounds), the fixed-shaping die will be used. At all events, given the low viscosity of the material it is possible to work with a high flow rate and an acceptable temperature, i.e. lower than the above mentioned temperature limit, although using a fixed die.

If the following working is carried out on compounds with high green strength, great viscosity and weak stickiness (non-critical compounds), the same device can be used by merely and exclusively replacing the shaping die with the calendering device or leaving the discharge opening free. In this case, in spite of the high viscosity of the material, the low pressure variation given by the calender action enables a high flow rate and an acceptable temperature to be adopted in working.

If the discharge opening is free, the compound coming out of the extrusion device can be introduced into an auxiliary shaping device placed in cascade relative to the extrusion device and spaced apart from the discharge opening. The auxiliary shaping device is for example a calender with one or two rollers or a fixed die that are spaced apart from the discharge opening. At the extruder exit the pressure and temperature variations generated by the head that in this case consists of the discharge opening alone are substantially zero. Shaping and conformation of the compound are carried out in the auxiliary shaping device after the compound has become partly cold so as to divide the temperature and pressure variations into several steps.

Preferably, if the compound viscosity is greater than about 75 ML (1+4), the calendering device can be installed. Alternatively, the discharge opening can be left free.

Preferably, using the calendering device, the pressure increase overhead of the compound is maintained under 20 bars, more preferably within a range included between about 5 bars and about 15 bars.

Preferably, using the shaping die, the pressure increase overhead of the compound is maintained under 60 bars, more preferably within a range included between about 20 bars and about 60 bars.

Preferably, using the calendering device, the temperature increase overhead of the compound is maintained under 10°C, more preferably within a range included between about 1°C and about 5°C.

Preferably, using the shaping die, the temperature increase overhead of the compound is maintained under 25°C, more preferably within a range included between about 10°C and about 20°C.

Preferably, the shaping die has a shaping channel opening into a shaping slit; wherein said shaping channel becomes flat and widens out on moving close to the plane containing the rotation axes of the screws, until it takes the conformation of the shaping slit.

Preferably, the extrusion device comprises a third supporting body carrying an adapter and movable between a first position, at which it is installed on the discharge opening, and a second position at which it is spaced apart from said discharge opening; in the second position, the adapter being operatively interposed between the discharge opening and the calendering device. Said adapter enables the elastomeric compound to correctly flow towards the passage port delimited by the rollers.

According to a preferred embodiment, the third supporting body is mounted on the holding body.

More preferably, the third supporting body is hinged on the holding body and movable in rotation between the first and second positions. The adapter therefore is already in the vicinity of the portion of the extrusion device to which it has to be coupled.

Preferably, the third supporting body comprises two lugs each extending on one side of an outlet opening of said adapter; each of the lugs being partly insertable between the rollers of the calendering device and having two arched surfaces the shape of each of them matching the shape of, and facing a portion of one of said rollers. The lugs are designed to laterally delimit the elastomeric compound sheet that is pressed between the rollers.

Preferably, the extrusion device comprises a plurality of co-rotating extrusion screws that are parallel to and penetrate into each other.

Preferably, said extrusion screws have at least one conveying region and at least one mastication region of the compound along the longitudinal extension thereof.

Further features and advantages will become more apparent from the detailed description of a preferred but not exclusive embodiment of an extrusion device and process for producing elastomeric compounds, in accordance with the present invention.

This description will be set out hereinafter with reference to the accompanying drawings, given by way of non-limiting example, in which:
- Fig. 1 is an elevation side view in longitudinal section of an extrusion device in accordance with the present invention in a first operating configuration;
- Fig. 2 shows a top view in section of an enlarged portion of the extrusion device in Fig. 1 in the first operating configuration;
- Fig. 3 is an elevation side view partly in section of the enlarged portion in Fig. 2;
- Fig. 4 shows a top view in section of the enlarged portion in Fig. 2 in a second operating configuration;
- Fig. 5 is an elevation side view partly in section of the enlarged portion in Fig. 4;
- Fig. 6 shows the extrusion device of Fig. 1 in a third operating configuration;
- Fig. 7 is a graph illustrating the flow rate/pressure course at a constant temperature;
- Fig. 8 is a graph showing the temperature/pressure course at a constant flow rate.

With reference to the drawings, an extrusion device for producing elastomeric compounds preferably used for producing tyres for vehicle wheels has been generally identified by reference numeral 1.

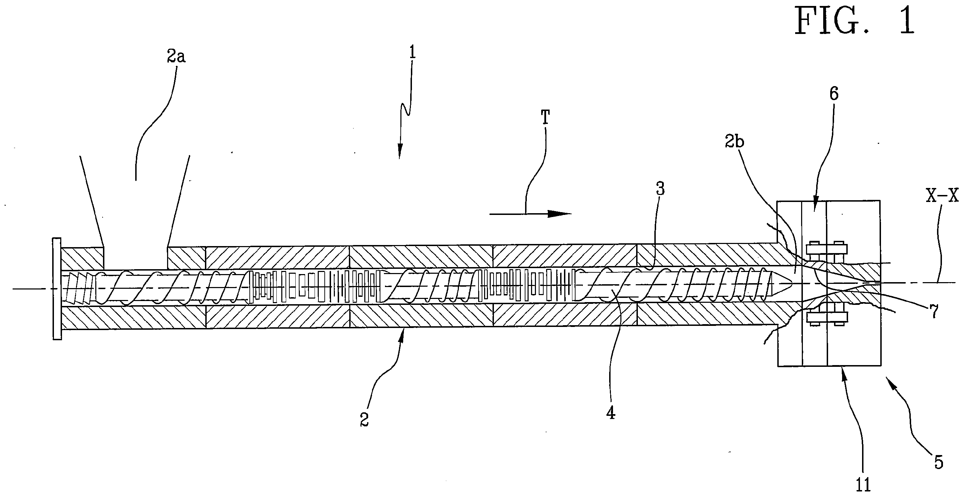

Device 1 comprises a substantially cylindrical holding body 2 which mainly extends along a longitudinal direction "X-X" and carries a plurality (two for example) of extrusion screws 4 (only one of which is shown in Fig. 1) disposed in side by side relation at the inside of a chamber 3 thereof. In accordance with further embodiments not shown, the extrusion device can be of the single-screw or multi-screw type. In a preferred embodiment not shown, the screws (seen in cross-section) are disposed substantially according to a ring as described and illustrated in known documents US 2004/0094862 and US 2007/0121421, for example.

The holding body 2 has at least one feeding opening 2a (Fig. 1) radially opening into a side wall of same to enable at least one precursor of the compound to be produced to be introduced into chamber 3. Typically this precursor is the ingredient or ingredients, although it is not to be excluded the case of a mere reworking or remixing of a compound previously produced by other mixing devices, without the addition of further ingredients. The holding body 2 further has a discharge opening 2b for the finished compound placed at a distal end of said body 2. In the embodiment shown in the accompanying drawings, the discharge opening 2b corresponds to an open longitudinal end of chamber 3.

The extrusion screws 4 typically are self-cleaning and co-rotating screws penetrating into each other. They are rotatably supported by body 2 and substantially extend along the whole longitudinal extension of chamber 3. The extrusion screws 4 are driven in rotation by a motor, not shown, and along their longitudinal extension have regions with different structural features to submit the compound to different process steps. Screws 4 by their rotation cause the compound components to move forward in a predetermined transport direction "T" while at the same time said components are treated so as to produce the compound and give the latter the desired physico-chemical features before it is ejected through the discharge opening 2b. For instance, along said transport direction "T" of the compound, the extrusion device 1 has a material-feeding region, a mastication region, a mixing region and a transport region towards said discharge opening 2b. Irrespective of the specific sequence of different-treatment regions, intense-mixing regions, transport regions and mixed regions are present. In the intense mixing regions the material is submitted to shearing and axial stresses with heat production due to the viscosity of the treated materials. In these regions filling of the chamber portion 3 is almost complete and the treated materials lie substantially in contact with the whole corresponding radially internal surface of the holding body 2. In the transport regions, filling of chamber 3 is included between about 20% and 50% and the materials are subjected to lower stresses/deformations. The extrusion device 1 further comprises an extrusion head 5 located at the discharge opening 2b, the function of which is to shape the elastomeric material coming out of the extrusion device 1 into a desired cross section. The extrusion head 5 of the extrusion device 1 according to the invention is interchangeable. In fact, the extrusion device 1 comprises a connecting flange 6 fixedly mounted on the discharge opening 2b.

Flange 6 has a central opening 7 for passage of the elastomeric compound flowing through the discharge opening 2b and a peripheral portion 8 to which a first hinge 9 and a second hinge 10 are fastened, said hinges being disposed on diametrically opposite regions of flange 6. The first and second hinges 9, 10 have articulation axes perpendicular to the longitudinal direction "X-X".

The extrusion device 1 comprises a first supporting body 11 defined by a plate carrying a shaping die 12 provided with a shaping channel 13 terminating with a shaping slit 13a.

The central opening 7 of flange 6 at the discharge opening 2b has a cross section shaped like the discharge opening 2b itself. On moving on towards the shaping die 12, the inner walls of the central opening 7 converge and the cross-sectional area of the central opening 7 decreases.

The shaping channel 13 at flange 6 has a cross section shaped like the central opening 7 of said flange 6. On moving on towards the shaping slit 13a, the shaping channel 13 becomes flat and widens approaching the plane containing the rotation axes of screws 4, until it takes the same conformation as the shaping slit 13a.

The first supporting body 11 has a peripheral portion provided with a third hinge 14 with an articulation axis parallel to the articulation axis of the first hinge 9 and connected to the first hinge 9 by arms 15.

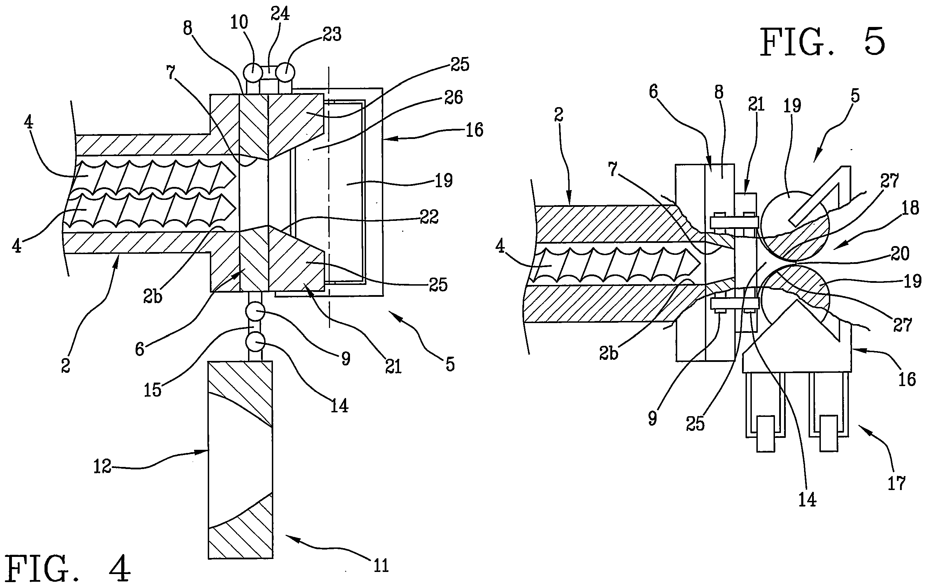

Through rotation around the first 9 and third 14 hinges, the first supporting body 11 can be moved between a first and a second position. In the first position (shown in Figs. 1, 2 and 3), the first supporting body 11 faces and is disposed against the connecting flange 6 and there locked through suitable means, not shown. The shaping die 12 intercepts the elastomeric material flow that therefore passes through the shaping slit 13a. In the second position (shown in Fig. 4), the first supporting body 11 is rotated through about 180° relative to the first position and is maintained substantially alongside flange 6.

The extrusion device 1 comprises a second supporting body 16 which is not fastened to the holding body 2 but disposed on a carriage 17 provided with wheels or runners and possibly guided on a rail or other type of guide, not shown. The second supporting body 16 carries a calendering device 18 formed with a single roller (according to an embodiment not shown) or a pair of facing rollers 19 (Fig. 5). The two rollers 19 between them delimit a passage port 20 for the elastomeric compound (Fig. 5).

The extrusion device 1 comprises a third supporting body 21 defined by a plate carrying an adapter having a transition channel 22. The transition channel 22 is used to guide the compound coming out of the discharge opening 2b towards the passage port 20 of the calendering device 18.

The third supporting body 21 has a peripheral portion provided with a fourth hinge 23 with an articulation axis parallel to the articulation axis of the second hinge 10 and connected to the second hinge 10 by means of arms 24.

Through rotation around the second 10 and fourth 23 hinges, the third supporting body 21 can be moved between a first and a second position. In the first position (shown in Figs. 4 and 5), the third supporting body 21 faces and is disposed against the connecting flange 6 and there locked through suitable means, not shown. The third supporting body 21 intercepts the elastomeric material flow that therefore passes through the transition channel 22.

The third supporting body 21 comprises two lugs 25 each extending on one side of an outlet opening 26 of the transition channel 22 (Fig. 4). Each of lugs 25 has a wedge-shaped configuration and is provided with two arched opposite surfaces 27, preferably as cylindrical portions (Fig. 5). The two opposite surfaces 27 of each lug 25 are joined together at a straight end edge and the two end edges of the two lugs 25 are mutually aligned and substantially lie in the lying plane of the rotation axes of screws 4.

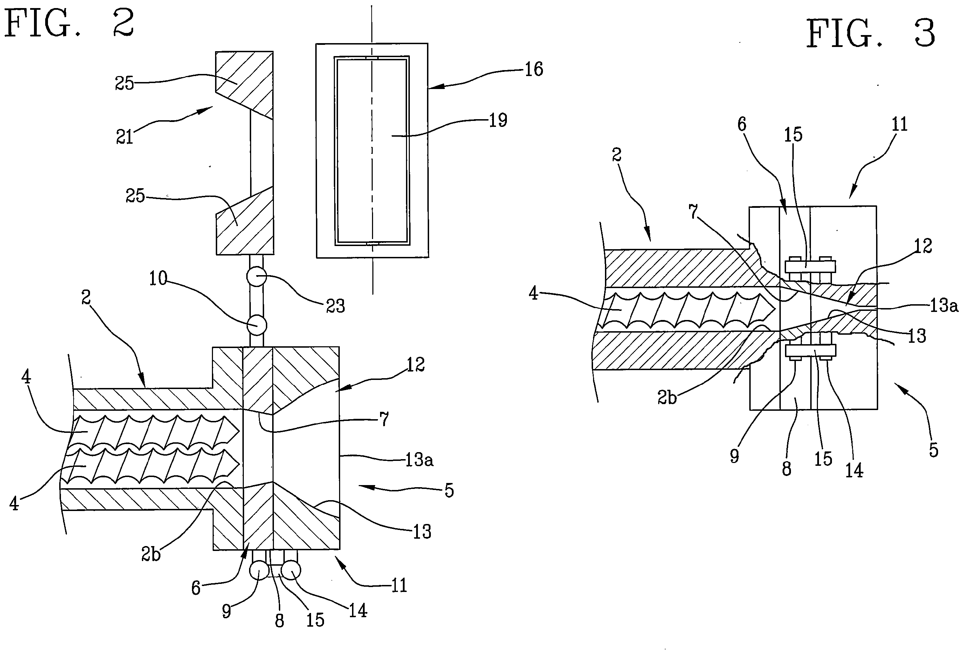

In the second position (shown in Fig. 2), the third supporting body 21 is rotated through about 180° relative to the first position and is maintained substantially alongside flange 6.

When the third supporting body 21 is in the first position (Figs. 4 and 5), the second supporting body 16 is positioned in front of the adapter 21, in such a manner that the passage port 20 is in communication with the transition channel 22 and the discharge opening 2b. The two end edges are inserted in the passage port 20 of rollers 19 of the calendering device 18 and, in this position, each of the two arched surfaces 27 of each lug 25 has a shape conforming to and facing a portion of one of said rollers 19. The two lugs 25 prevent the compound coming out of the outlet opening 26 of the transition channel 22 from getting out laterally, along an axial direction, from the passage port 20 delimited by rollers 19.

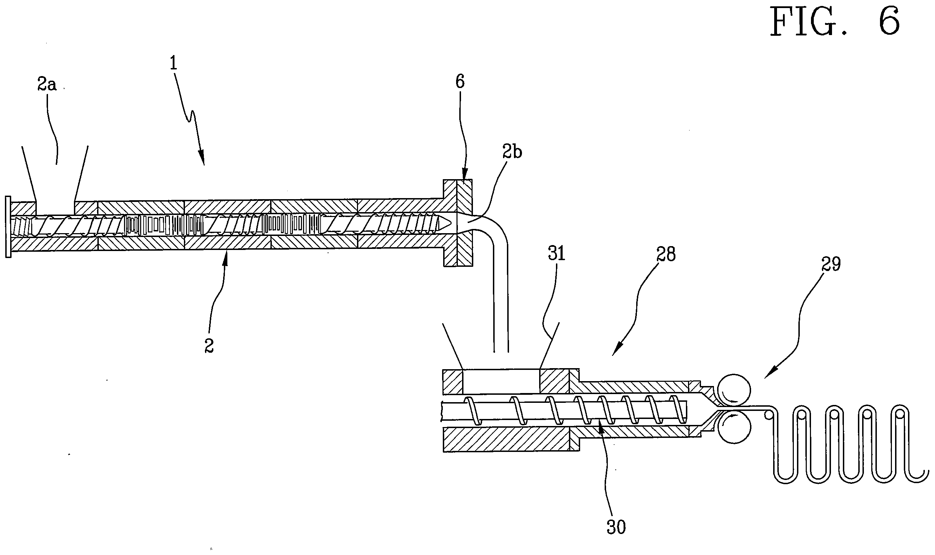

In an embodiment, downstream of the extrusion device 1 and spaced apart from the discharge opening 2b, there is an auxiliary shaping device 28. The auxiliary shaping device 28 can be for instance a two-roller calender 29 placed at the end of a screw conveyor 30 having a hopper 31 placed under the discharge opening 2b (as shown in Fig. 6).

In use and according to the process of the invention, selection of the type of extrusion head 5 to be used is carried out after controlling the physico-chemical features of the elastomeric compound to be treated, so as to limit the temperature and pressure that the compound reaches and avoid dangerous scorching and undesired local curing processes during extrusion. For instance, if the compound under production has a low viscosity and is very sticky, the shaping die 12 can be installed bringing the first supporting body 11 to the first position while the third supporting body 21 remains in the second position and the second supporting body 16 is spaced apart from the discharge opening 2b. Given the low viscosity of the material and although the pressure variation is high, in spite of the presence of the fixed die 12 the flow rate is high and the temperature is acceptable, i.e. lower than the above mentioned temperature limit.

By way of example, the shaping die 12 is used if the viscosity "µ" of the elastomeric compound is lower than about 50 ML (1+4). Using the shaping die 12, the temperature increase "ΔT" overhead of the compound is included between about 10°C and about 20°C and the pressure increase "ΔP" overhead of the compound is included between about 20 bars and about 60 bars (intended as the pressure/temperature difference between the pressure/temperature of the compound in the discharge opening 2b and the pressure/temperature of the compound in the shaping slit 13a).

At the exit of the extrusion device 1 a sheet of elastomeric material is obtained the section of which substantially has a shape conforming to that of the shaping slit 13a.

If, in a subsequent work cycle, a new compound is required to be treated which for example is very viscous and of weak stickiness, it is sufficient to rotate the first supporting body 11 until bringing it to its second position, rotate the third supporting body 21 until bringing it against flange 6 and moving carriage 17 close to rollers 19 so as to dispose the calendering device 18 in front of the outlet opening 26 with the end edges of lugs 25 inserted in the passage port 20 (Figs. 4 and 5).

By way of example, the calendering device 18 is used if the viscosity "µ" of the elastomeric compound is greater than about 75 ML (1+4). Using the calendering device 18, the pressure increase "ΔP" overhead of the compound is included between about 5 bars and about 15 bars, and the temperature increase "ΔT" overhead of the compound is included between about 1°C and about 5°C (intended as the pressure/temperature difference between the pressure/temperature of the compound in the discharge opening 2b and the pressure/temperature of the compound between rollers 19).

At the exit of the extrusion device 1 a sheet of elastomeric material is obtained the section shape of which substantially matches that of the passage port 20 laterally delimited by lugs 25.

Preferably, rollers 19 are frontally moved close to the third supporting body 21 to make positioning of lugs 25 between rollers 19 easy. To this aim, preferably, carriage 17 is positioned on an arched rail having a first stretch close to the extrusion head 5 and substantially orthogonal to the end edges of lugs 25. In addition the rail has a curved stretch used to carry carriage 17 when the shaping die 12 is used, alongside the transition region of the compound sheet coming out of the extrusion device 1.

If, in a subsequent work cycle, another new compound is required to be treated which is very viscous and of weak stickiness, but of such a nature that the immediate passage into the calendering device 18 would cause unacceptable temperature and pressure increases, the discharge opening 2b is left free and the compound coming out of same is caused to flow into the auxiliary shaping device 28 placed downstream of the extrusion device 1 and spaced apart from the discharge opening 2b. To this aim, the first supporting body 11 is rotated until bringing it to its second position, the second supporting body 16 is moved away from the extrusion device 1 and the third supporting body 21 is brought to its second position, so as to leave the discharge opening 2b of the extrusion device 1 and/or the opening of flange 6 open.

The production of compounds carried out by the above described device and/or process is particularly advantageous in case of production of elastomeric compounds that can be cured and used for production of corresponding semifinished products or precursors of structural components of a tyre. These semifinished products for instance can be (although the example is not to be intended as exhaustive): carcass ply, belt layers, bead core, bead filler, sidewall, tread band, liner, abrasion-proof elongated element.

According to processes known in the art, the semifinished products are assembled on one or more supports and/or building drums, for producing a green tyre. This green tyre is then cured for providing a finished tyre. According to known alternative processes, the green tyre can be built without production of true semifinished products, by use of precursors of these semifinished products of generally elongated shape (rubberized threads, rubberized strips comprising textile and/or metallic reinforcing elements or not). These precursors are spirally wound up and/or disposed in side by side relationship (typically with some mutual overlapping) on suitable supports so as to reproduce, by subsequent windings and/or superpositions, the section and shape of each respective semifinished product. Processes of this type are described, for example, in the European patent applications EP 928680 and EP 928702, or in the International patent application WO 01/36185 in the name of the same Applicant. The supports on which these precursors are wound and/or disposed side by side can for instance comprise:
- a building drum having a substantially cylindrical configuration (for instance for deposition of rubberized strips for reproducing the liner, one or more carcass plies, sidewalls, etc.);
- a shaping drum having a substantially toroidal configuration for support of rubberized strips laid down for reproducing liner, carcass ply/plies and belt strips;
- an auxiliary drum of a substantially cylindrical configuration for deposition of strips adapted to form belt layers and tread band;
- a rigid toroidal configuration support externally shaped in such a manner as to substantially reproduce the outer surface of the finished tyre to be produced;
- a feed belt device associated with one of the above mentioned supports.

## Claims

1. An extrusion device (1) for producing elastomeric compounds, comprising:
- a holding body (2) extending along a longitudinal axis (X-X) and internally confining a chamber (3);
- at least one extrusion screw (4) disposed in the chamber (3) and parallel to said longitudinal axis (X-X), said at least one extrusion screw (4) having at least one conveying region and at least one mastication region of said elastomeric compound along the longitudinal extension thereof, wherein at an axial end of the holding body (2), the chamber (3) has a discharge opening (2b) for the elastomeric compound to be produced;
- at least one shaping die (12);
- at least one calendering device (18);
wherein said at least one shaping die (12) and at least one calendering device (18) are installable alternatively and in an interchangeable manner at the discharge opening (2b) so as to define an extrusion head (5) suitable for shaping the outgoing compound into a predetermined shape, while maintaining the compound temperature and/or the outgoing pressure of said extrusion device (1) under critical threshold values for said compound,
wherein the extrusion device (1) comprises a first supporting body (11) carrying the shaping die (12) and movable between a first position at which it is installed on the discharge opening (2b), and a second position at which it is spaced apart from said discharge opening (2b),
wherein the first supporting body (11) is hinged on the holding body (2) and movable in rotation between the first and second positions,
wherein the extrusion device (1) comprises a second supporting body (16) carrying the calendering device (18) and movable between a first position, at which it is installed at the discharge opening (2b), and a second position at which it is spaced apart from said discharge opening (2b),
and wherein the second supporting body (16) comprises a carriage (17) movable in translation between the first and second positions.

2. The extrusion device (1) as claimed in claim 1, wherein the shaping die (12) has a shaping channel (13) opening into a shaping slit (13a); wherein said shaping channel (13) becomes flat and widens out on moving close to the plane containing the rotation axes of the screws (4), until it takes the same conformation as the shaping slit (13a).

3. The extrusion device (1) as claimed in claim 1, comprising a third supporting body (21) carrying an adapter and movable between a first position, at which it is installed on the discharge opening (2b), and a second position at which it is spaced apart from said discharge opening (2b); the adapter, in the second position, being operatively interposed between the discharge opening (2b) and the calendering device (18).

4. The extrusion device (1) as claimed in the preceding claim, wherein the third supporting body (21) is mounted on the holding body (2).

5. The extrusion device (1) as claimed in claim 3, wherein the third supporting body (21) is hinged on the holding body (2) and movable in rotation between the first and second positions.

6. The extrusion device (1) as claimed in claim 3, wherein the third supporting body (21) comprises two lugs (25) each extending on one side of an outlet opening (26) of said adapter; each of the lugs (25) being partly insertable between the rollers (19) of the calendering device (18) and having two arched surfaces (27) the shape of each of them matching the shape of, and facing a portion of one of said rollers (19).

7. The extrusion device (1) as claimed in anyone of claims 1 to 6, comprising a plurality of co-rotating extrusion screws (4) that are parallel to and penetrate into each other.

8. The extrusion device (1) as claimed in the preceding claim, wherein said extrusion screws (4) have at least one conveying region and at least one mastication region of said elastomeric compound along the longitudinal extension thereof.

9. An extrusion process for producing elastomeric compounds, comprising:
0) providing the extrusion device (1) according to any one of claims 1 to 8;
i) evaluating the physico-chemical features of the compound to be produced;
ii) selecting and installing one of said shaping die (12) and calendering device (18), so as to define said extrusion head (5) on said discharge opening (2b) of the extrusion device (1), as a function of at least one of said physico-chemical features, or leaving the discharge opening (2b) free, in order to maintain the compound temperature and/or outgoing pressure of said extrusion device (1) below critical threshold values for said compound;
iii) introducing at least one precursor of said compound to be produced through at least one feeding opening (2a) of the extrusion device (1);
iv) mixing and making said at least one precursor move on along said chamber (3) of the extrusion device (1); and
v) ejecting the compound through said extrusion head (5) or the free discharge opening (2b).

10. A process as claimed in claim 9, further comprising:
vi) changing the compound to be produced for a new compound to be produced;
vii) evaluating the physico-chemical features of the new compound;
viii) either replacing the extrusion head (5) on the discharge opening (2b) of the same extrusion device (1) with another extrusion head (5) or removing the previously installed extrusion head (5), as a function of at least one of said physico-chemical features, in order to maintain the temperature of the new compound and/or the outgoing pressure of said extrusion device under critical threshold values for said new compound;
ix) introducing at least one precursor of the new compound through said at least one feeding opening (2a) of the extrusion device (1);
x) mixing and making said at least one precursor move on along the chamber (3) of the extrusion device (1) containing said at least one extrusion screw (4); and
xi) ejecting the new compound through said extrusion head (5) or the free discharge opening (2b).

11. A process as claimed in claim 9 or 10, wherein if the discharge opening is free, the compound coming out of the extrusion device (1) is admitted to an auxiliary shaping device (28) disposed in cascade relative to the extrusion device (1) and spaced apart from the discharge opening (2b).

12. A process as claimed in anyone of claims 9 to 11, wherein the physico-chemical features comprise viscosity (µ) and/or stickiness.

13. A process as claimed in anyone of claims 9 to 12, wherein the physico-chemical features comprise the "green strength".

14. A tyre production process, comprising:
- producing an uncured elastomeric compound by the extrusion process as claimed in at least one of claims 9 to 13,
- building a green tyre comprising a plurality of structural elements and/or precursors of said structural elements, wherein at least one of said plurality of structural elements and/or precursors of said structural elements comprises said uncured elastomeric compound,
- submitting said green tyre to curing and moulding for producing said tyre.

## Patentansprüche

1. Extrusionsvorrichtung (1) zur Herstellung von Elastomerverbindungen, wobei die Vorrichtung umfasst:
- einen Haltekörper (2), der sich entlang einer Längsachse (X-X) erstreckt und in sich eine Kammer (3) begrenzt;
- zumindest eine Extrusionsschnecke (4), die in der Kammer (3) und parallel zu der Längsachse (X-X) angeordnet ist, wobei die zumindest eine Extrusionsschnecke (4) zumindest eine Förderregion und zumindest eine Knetregion für die Elastomerverbindung entlang ihrer Längserstreckung aufweist, wobei an einem axialen Ende des Haltekörpers (2) die Kammer (3) eine Ausgabeöffnung (2b) für die zu produzierende Elastomerverbindung aufweist;
- zumindest eine formgebende Form (12);
- zumindest eine Kalandriervorrichtung (18);
wobei die zumindest eine formgebende Form (12) und die zumindest eine Kalandriervorrichtung (18) alternativ und auf austauschbare Weise an der Ausgabeöffnung (2b) installiert werden können, um einen Extrusionskopf (5) zu definieren, der zur Formung der ausgehenden Verbindung in eine vorbestimmte Form geeignet ist, während die Verbindungstemperatur und/oder der Ausgabedruck der Extrusionsvorrichtung (1) unterhalb von für die Verbindung kritischen Schwellenwerten gehalten wird/werden, wobei die Extrusionsvorrichtung (1) einen ersten Trägerkörper (11) umfasst, der die formgebende Form (12) trägt und zwischen einer ersten Position, in der er an der Ausgabeöffnung (2b) installiert ist, und einer zweiten Position, in der er von der Ausgabeöffnung (2b) beabstandet ist, beweglich ist,
wobei der erste Trägerkörper (11) an dem Haltekörper (2) scharnierartig angelenkt ist und drehbar zwischen der ersten und zweiten Position beweglich ist,
wobei die Extrusionsvorrichtung (1) einen zweiten Trägerkörper (16) umfasst, der die Kalandriervorrichtung (18) trägt und zwischen einer ersten Position, in der er an der Ausgabeöffnung (2b) installiert ist, und einer zweiten Position, in der er von der Ausgabeöffnung (2b) beabstandet ist, beweglich ist,
und wobei der zweite Trägerkörper (16) einen Schlitten (17) umfasst, der verschiebbar zwischen der ersten und zweiten Position beweglich ist.

2. Extrusionsvorrichtung (1) nach Anspruch 1, wobei die formgebende Form (12) einen Formungskanal (13) aufweist, der sich in einen Formungsschlitz (13a) öffnet; wobei der Formungskanal (13) flach wird und sich ausweitet, während er sich nahe zu der Ebene hinbewegt, die die Drehachsen der Schnecken (4) enthält, bis er dieselbe Ausgestaltung wie der Formungsschlitz (13a) annimmt.

3. Extrusionsvorrichtung (1) nach Anspruch 1, umfassend einen dritten Trägerkörper (21) umfasst, der einen Adapter trägt und zwischen einer ersten Position, in der er an der Ausgabeöffnung (2b) installiert ist, und einer zweiten Position, in der er von der Ausgabeöffnung (2b) beabstandet ist, beweglich ist; wobei der Adapter in der zweiten Position wirkmäßig zwischen der Ausgabeöffnung (2b) und der Kalandriervorrichtung (18) angeordnet ist.

4. Extrusionsvorrichtung (1) nach dem vorhergehenden Anspruch, wobei der dritte Trägerkörper (21) an dem Haltekörper (2) montiert ist.

5. Extrusionsvorrichtung (1) nach Anspruch 3, wobei der dritte Trägerkörper (21) scharnierartig an dem Haltekörper (2) angelenkt und drehbar zwischen der ersten und zweiten Position beweglich ist.

6. Extrusionsvorrichtung (1) nach Anspruch 3, wobei der dritte Trägerkörper (21) zwei Laschen (25) umfasst, die sich jeweils auf einer Seite einer Auslassöffnung (26) des Adapters erstrecken; wobei jede der Laschen (25) teilweise zwischen die Walzen (19) der Kalandriervorrichtung (18) einsetzbar ist und zwei gekrümmte Flächen (27) aufweist, deren Form jeweils der Gestalt eines Abschnitts einer der Walzen (19) angepasst ist und diesem zugewandt ist.

7. Extrusionsvorrichtung (1) nach einem der Ansprüche 1 bis 6, umfassend eine Vielzahl von gemeinsam drehenden Extrusionsschnecken (4), die zueinander parallel sind und einander durchdringen.

8. Extrusionsvorrichtung (1) nach dem vorhergehenden Anspruch, wobei die Extrusionsschnecken (4) zumindest eine Förderregion und zumindest eine Knetregion für die Elastomerverbindung entlang einer Längserstreckung derselben aufweisen.

9. Extrusionsverfahren zur Herstellung von Elastomerverbindungen, wobei die Verfahren folgende Schritte umfasst:
O) Bereitstellen der Extrusionsvorrichtung (1) nach einem der Ansprüche 1 bis 8;
i) Bewerten der physikalisch-chemischen Merkmale der zu produzierenden Verbindung;
ii) Auswählen und Installieren entweder der formgebenden Form (12) oder der Kalandriervorrichtung (18), um den Extrusionskopf (5) an der Ausgabeöffnung (2b) der Extrusionsvorrichtung (1) zu definieren, als eine Funktion zumindest eines der physikalisch-chemischen Merkmale, oder Freilassen der Ausgabeöffnung (2b), um die Verbindungstemperatur und/oder den Ausgangsdruck der Extrusionsvorrichtung (1) unterhalb von für die Verbindung kritischen Schwellenwerten zu halten;
iii) Einbringen zumindest eines Vorläufers der zu produzierenden Verbindung durch zumindest eine Einspeiseöffnung (2a) der Extrusionsvorrichtung (1);
iv) Mischen und Weiterbewegen des zumindest einen Vorläufers entlang der Kammer (3) der Extrusionsvorrichtung (1); und
v) Ausgeben der Verbindung durch den Extrusionskopf (5) oder die freie Ausgabeöffnung (2b).

10. Verfahren nach Anspruch 9, das ferner die folgenden Schritte umfasst:
vi) Ändern der zu produzierenden Verbindung auf eine neue zu produzierende Verbindung;
vii) Bewerten der physikalisch-chemischen Merkmale der neuen Verbindung;
viii) entweder Austauschen des Extrusionskopfs (5) an der Ausgabeöffnung (2b) derselben Extrusionsvorrichtung (1) gegen einen anderen Extrusionskopf (5), oder Entfernen des zuvor installierten Extrusionskopfs (5), als eine Funktion zumindest eines der physikalisch-chemischen Merkmale, um die Temperatur der neuen Verbindung und/oder des ausgehenden Drucks der Extrusionsvorrichtung unterhalb von für die neue Verbindung kritischen Schwellenwerten zu halten;
ix) Einbringen zumindest eines Vorläufers der neuen Verbindung durch die zumindest eine Einspeiseöffnung (2a) der Extrusionsvorrichtung (1);
x) Mischen und Weiterbewegen des zumindest einen Vorläufers entlang der Kammer (3) der Extrusionsvorrichtung (1), welche die zumindest eine Extrusionsschnecke (4) enthält; und
xi) Ausgeben der neuen Verbindung durch den Extrusionskopf (5) oder die freie Ausgabeöffnung (2b).

11. Verfahren nach Anspruch 9 oder 10, wobei, wenn die Ausgabeöffnung frei ist, die Verbindung, die aus der Extrusionsvorrichtung (1) herauskommt, in eine zusätzliche Formungsvorrichtung (28) eingelassen wird, die kaskadierend relativ zu der Extrusionsvorrichtung (1) angeordnet und von der Ausgabeöffnung (2b) beabstandet angeordnet ist.

12. Verfahren nach einem der Ansprüche 9 bis 11, wobei die physikalisch-chemischen Merkmale die Viskosität (p) und/oder Klebrigkeit umfassen.

13. Verfahren nach einem der Ansprüche 9 bis 12, wobei die physikalisch-chemischen Merkmale die "Grünfestigkeit" umfassen.

14. Reifenherstellungsverfahren, umfassend die folgenden Schritte:
- Herstellen einer nicht vulkanisierten Elastomerverbindung durch das Extrusionsverfahren nach zumindest einem der Ansprüche 9 bis 13,
- Fertigen eines Rohreifens umfassend eine Vielzahl von Strukturelementen und/oder Vorläufern der Strukturelemente, wobei zumindest eines der Vielzahl von Strukturelementen und/oder Vorläufern der Strukturelemente die nicht vulkanisierte Elastomerverbindung umfasst,
- Unterziehen des Rohreifens einer Vulkanisierung und einer Formung zur Herstellung des Reifens.

## Revendications

1. Dispositif d'extrusion (1) pour produire des composés élastomères, comprenant :
- un corps de maintien (2) s'étendant le long d'un axe longitudinal (X-X) et renfermant à l'intérieur une chambre (3) ;
- au moins une vis d'extrusion (4) disposée dans la chambre (3) et parallèle audit axe longitudinal (X-X), ladite au moins une vis d'extrusion (4) ayant au moins une région d'acheminement et au moins une région de mastication dudit composé élastomère le long l'extension longitudinale de celle-ci, dans lequel, au niveau d'une extrémité axiale du corps de maintien (2), la chambre (3) présente une ouverture de décharge (2b) pour le composé élastomère à produire ;
- au moins une filière (12) ;
- au moins un dispositif de calandrage (18) ;
dans lequel ladite au moins une filière (12) et ledit au moins un dispositif de calandrage (18) peuvent être installés en alternance et de manière interchangeable au niveau de l'ouverture de décharge (2b) de manière à définir une tête d'extrusion (5) appropriée pour mettre le composé sortant sous une forme prédéterminée, tout en maintenant la température du composé et/ou la pression de sortie dudit dispositif d'extrusion (1) en dessous de valeurs seuil critiques pour ledit composé,
dans lequel le dispositif d'extrusion (1) comprend un premier corps de support (11) portant la filière (12) et mobile entre une première position à laquelle il est installé sur l'ouverture de décharge (2b) et une deuxième position à laquelle il est espacé de ladite ouverture de décharge (2b),
dans lequel le premier corps de support (11) est articulé sur le corps de support (2) et mobile en rotation entre les première et deuxième positions,
dans lequel le dispositif d'extrusion (1) comprend un deuxième corps de support (16) portant le dispositif de calandrage (18) et mobile entre une première position, à laquelle il est installé au niveau de l'ouverture de décharge (2b), et une deuxième position à laquelle il est espacé de ladite ouverture de décharge (2b),
et dans lequel le deuxième corps de support (16) comprend un chariot (17) mobile en translation entre les première et deuxième positions.

2. Dispositif d'extrusion (1) tel que revendiqué dans la revendication 1, dans lequel la filière (12) a un canal de mise en forme (13) débouchant dans une fente de mise en forme (13a) ;
dans lequel ledit canal de mise en forme (13) devient plat et s'élargit en se rapprochant du plan contenant les axes de rotation des vis (4), jusqu'à ce qu'il prenne la même conformation que la fente de mise en forme (13a).

3. Dispositif d'extrusion (1) tel que revendiqué dans la revendication 1, comprenant un troisième corps de support (21) portant un adaptateur et mobile entre une première position, à laquelle il est installé sur l'ouverture de décharge (2b), et une deuxième position à laquelle il est espacé de ladite ouverture de décharge (2b) ; l'adaptateur, dans la deuxième position, étant interposé de manière fonctionnelle entre l'ouverture de décharge (2b) et le dispositif de calandrage (18).

4. Dispositif d'extrusion (1) tel que revendiqué dans la revendication précédente, dans lequel le troisième corps de support (21) est monté sur le corps de maintien (2).

5. Dispositif d'extrusion (1) tel que revendiqué dans la revendication 3, dans lequel le troisième corps de support (21) est articulé sur le corps de maintien (2) et mobile en rotation entre les première et deuxième positions.

6. Dispositif d'extrusion (1) tel que revendiqué dans la revendication 3, dans lequel le troisième corps de support (21) comprend deux pattes (25) s'étendant chacune sur un côté d'une ouverture de sortie (26) dudit adaptateur ; chacune des pattes (25) pouvant être partiellement insérée entre les rouleaux (19) du dispositif de calandrage (18) et ayant deux surfaces arquées (27) dont la forme de chacune d'elles correspondant à la forme de, et faisant face à une partie de l'un desdits rouleaux (19).

7. Dispositif d'extrusion (1) tel que revendiqué dans l'une quelconque des revendications 1 à 6, comprenant une pluralité de vis d'extrusion en co-rotation (4) qui sont parallèles les unes aux autres et s'interpénètrent.

8. Dispositif d'extrusion (1) tel que revendiqué dans la revendication précédente, dans lequel lesdites vis d'extrusion (4) présentent au moins une région d'acheminement et au moins une région de mastication dudit composé élastomère le long de l'extension longitudinale de celles-ci.

9. Procédé d'extrusion pour la production de composés élastomères, comprenant le fait :
0) de fournir le dispositif d'extrusion (1) selon l'une quelconque des revendications 1 à 8 ;
i) d'évaluer les caractéristiques physico-chimiques du composé à produire ;
ii) de sélectionner et d'installer l'un(e) de ladite filière (12) et dudit dispositif de calandrage (18), de manière à définir ladite tête d'extrusion (5) sur ladite ouverture de décharge (2b) du dispositif d'extrusion (1), en fonction d'au moins l'une desdites caractéristiques physico-chimiques, ou de laisser l'ouverture de décharge (2b) libre, afin de maintenir la température du composé et/ou la pression de sortie dudit dispositif d'extrusion (1) en dessous des valeurs seuil critiques pour ledit composé ;
iii) d'introduire au moins un précurseur dudit composé à produire à travers au moins une ouverture d'alimentation (2a) du dispositif d'extrusion (1) ;
iv) de mélanger et de faire avancer ledit au moins un précurseur le long de ladite chambre (3) du dispositif d'extrusion (1) ; et
v) d'éjecter le composé à travers ladite tête d'extrusion (5) ou l'ouverture de décharge (2b) libre.

10. Procédé tel que revendiqué dans la revendication 9, comprenant en outre le fait :
vi) de changer le composé à produire par un nouveau composé à produire ;
vii) d'évaluer les caractéristiques physico-chimiques du nouveau composé ;
viii) de remplacer la tête d'extrusion (5) sur l'ouverture de décharge (2b) du même dispositif d'extrusion (1) par une autre tête d'extrusion (5) ou de retirer la tête d'extrusion (5) préalablement installée, en fonction d'au moins l'une desdites caractéristiques physico-chimiques, afin de maintenir la température du nouveau composé et/ou la pression de sortie dudit dispositif d'extrusion en dessous de valeurs seuil critiques pour ledit nouveau composé ;
ix) d'introduire au moins un précurseur du nouveau composé à travers ladite au moins une ouverture d'alimentation (2a) du dispositif d'extrusion (1) ;
x) de mélanger et de faire avancer ledit au moins un précurseur le long de la chambre (3) du dispositif d'extrusion (1) contenant ladite au moins une vis d'extrusion (4) ; et
xi) d'éjecter le nouveau composé à travers ladite tête d'extrusion (5) ou l'ouverture de décharge (2b) libre.

11. Procédé tel que revendiqué dans la revendication 9 ou 10, dans lequel si l'ouverture de décharge est libre, le composé sortant du dispositif d'extrusion (1) est admis dans un dispositif de mise en forme auxiliaire (28) disposé en cascade par rapport au dispositif d'extrusion (1) et espacé de l'ouverture de décharge (2b).

12. Procédé tel que revendiqué dans l'une quelconque des revendications 9 à 11, dans lequel les caractéristiques physico-chimiques comprennent la viscosité (µ) et/ou l'adhésivité.

13. Procédé tel que revendiqué dans l'une quelconque des revendications 9 à 12, dans lequel les caractéristiques physicochimiques comprennent la « résistance à vert ».

14. Procédé de production de pneu, comprenant le fait :
- de produire un composé élastomère non durci par le procédé d'extrusion tel que revendiqué dans au moins l'une des revendications 9 à 13,
- de construire un pneu cru comprenant une pluralité d'éléments structurels et/ou de précurseurs desdits éléments structuraux, dans lequel au moins l'un(e) de ladite pluralité d'éléments structuraux et/ou des précurseurs desdits éléments structuraux comprend ledit composé élastomère non durci,
- de soumettre ledit pneu cru à un durcissement et à un moulage pour produire ledit pneu.
